# EUROPEAN PATENT APPLICATION

(11) **EP 4 560 346 A1**
(43) Date of publication of application: **28.05.2025**
(21) Application number: 22952014.3
(22) Date of filing: 22.07.2022
(51) Int. Cl.: G01S 5/14

(54) **TERMINAL AND POSITIONING METHOD**

(71) Applicant: NTT DOCOMO, INC., Tokyo 100-6150 (JP)
(72) Inventor: SHIMA, Kousuke, Tokyo 100-6150 (JP); OHARA, Tomoya, Tokyo 100-6150 (JP); TAKEDA, Daiki, Tokyo 100-6150 (JP); OKAMURA, Masaya, Tokyo 100-6150 (JP); HARADA, Hiroki, Tokyo 100-6150 (JP); ECHIGO, Haruhi, Tokyo 100-6150 (JP)
(74) Representative: Hoffmann Eitle
(86) International application number: PCT/JP2022/028517
(87) International publication number: WO 2024/018630

(57) **Abstract**

A terminal includes: a reception unit to receive, from a base station, an indication of measurement for positioning based on a beam transmitted from the base station; a control unit configured to perform the measurement; and a transmission unit configured to transmit a result of the measurement or a positioning result that is calculated based on the result of the measurement to the base station. The beam is applied to a block including a synchronization signal and broadcast information or to a signal for obtaining channel state information.

## Description

### FIELD OF THE INVENTION

The present invention relates to a terminal and a positioning method in a wireless communication system.

### BACKGROUND OF THE INVENTION

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). Various radio technologies and network architectures are being discussed in order to satisfy the requirements in NR such as: a system with large capacity; high-speed data transmission; low latency; simultaneous connections of a large number of terminals; low cost; power saving; and the like (for example, Non-Patent Document 1).

In addition, in the 3GPP standardization, a new device type as a reduced capability NR device (hereinafter, also referred to as "RedCapUE") is being discussed that has lower cost and higher complexity compared with an eMBB (enhanced Mobile Broadband) device or a URLLC (Ultra-Reliable and Low Latency Communications) device. In addition, with respect to the RedCapUE, supporting of HD-FDD (Half-Duplex Frequency Division Duplex) is being discussed in order to reduce the complexity.

### CITATION LIST

### Non-Patent Document

Non-Patent Document 1: 3GPP TS 38.300 V17.0.0 (2022-03)
Non-Patent Document 2: 3GPP TS 38.305 V17.0.0 (2022-03)
Non-Patent Document 3: 3GPP TS 38.455 V17.0.0 (2022-03)
Non-Patent Document 4: 3GPP TS 37.355 V17.0.0 (2022-03)
Non-Patent Document 5: 3GPP TS 23.032 V16.1.0 (2021-12)
Non-Patent Document 6: 3GPP TS 38.215 V17.1.0 (2022-03)
Non-Patent Document 7: 3GPP TS 38.331 V17.0.0 (2022-03)

### SUMMARY OF THE INVENTION

### TECHNICAL PROBLEM

Enhancement of UE (User Equipment) positioning is being discussed. In addition, positioning for a RedCap UE is being discussed. There is a possibility that the positioning without using the positioning reference signal (SRS for positioning or the like) will be specified for the RedCap UE from the perspective of either implementation cost or hardware.

The present invention has been made in view of the above points, and it is an object of the present invention to perform positioning by using a reference signal other than the reference signal for positioning.

### SOLUTION TO PROBLEM

According to the disclosed technique, a terminal is provided. The terminal includes: a reception unit configured to receive, from a base station, an indication of measurement for positioning based on a beam transmitted from the base station; a control unit configured to perform the measurement; and a transmission unit configured to transmit a result of the measurement or a positioning result that is calculated based on the result of the measurement to the base station. The beam is applied to a block including a synchronization signal and broadcast information or to a signal for obtaining channel state information.

### ADVANTAGEOUS EFFECTS OF INVENTION

According to the disclosed technique, positioning can be performed by using a reference signal other than the reference signal for positioning in the wireless communication system.

### BRIEF DESCRIPTION OF THE DRAWINGS

[Fig. 1] is a drawing for describing a wireless communication system.
[Fig. 2] is a drawing illustrating an example (1) of positioning.
[Fig. 3] is a drawing illustrating an example of measuring DL-RSTD.
[Fig. 4] is a drawing illustrating an example of measuring UL-RTOA.
[Fig. 5] is a drawing illustrating an example (2) of positioning.
[Fig. 6] is a drawing illustrating an example of measuring RTT.
[Fig. 7] is a drawing illustrating an example (1) of an SSB beam in an embodiment of the present invention.
[Fig. 8] is a drawing illustrating an example (2) of an SSB beam in an embodiment of the present invention.
[Fig. 9] is a drawing illustrating an example (3) of an SSB beam in an embodiment of the present invention.
[Fig. 10] is a drawing illustrating an example (1) of reporting the measurement result in an embodiment of the present invention.
[Fig. 11] is a drawing illustrating an example (2) of reporting the measurement result in an embodiment of the present invention.
[Fig. 12] is a drawing illustrating an example (3) of reporting the measurement result in an embodiment of the present invention.
[Fig. 13] is a drawing illustrating an example (4) of reporting the measurement result in an embodiment of the present invention.
[Fig. 14] is a drawing illustrating an example (5) of reporting the measurement result in an embodiment of the present invention.
[Fig. 15] is a drawing illustrating an example (6) of reporting the measurement result in an embodiment of the present invention.
[Fig. 16] is a drawing illustrating an example (7) of reporting the measurement result in an embodiment of the present invention.
[Fig. 17] is a drawing illustrating an example (8) of reporting the measurement result in an embodiment of the present invention.
[Fig. 18] is a drawing illustrating an example (9) of reporting the measurement result in an embodiment of the present invention.
[Fig. 19] is a drawing illustrating an example of a functional configuration of a base station 10 in an embodiment of the present invention.
[Fig. 20] is a drawing illustrating an example of a functional structure of a terminal 20 in an embodiment of the present invention.
[Fig. 21] is a drawing illustrating an example of a hardware structure of the base station 10 or the terminal 20 in an embodiment of the present invention.
[Fig. 22] is a drawing illustrating an example of a structure of a vehicle 2001 in an embodiment of the present invention.

### DETAILED DESCRIPTION OF THE PREFERRED EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

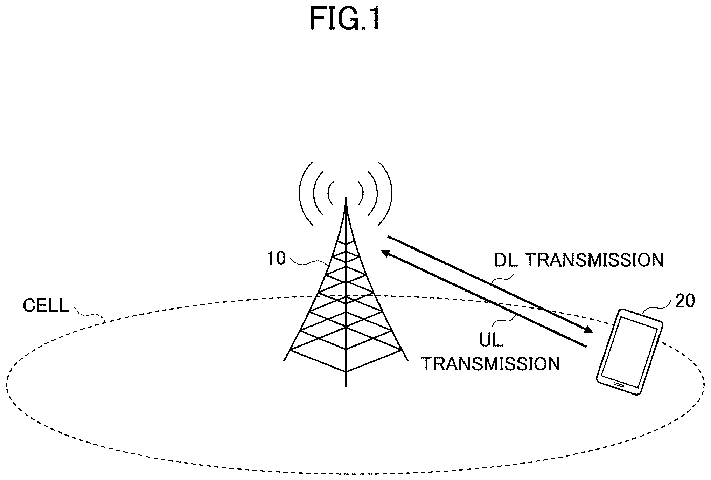

Fig. 1 is a drawing for describing a wireless communication system. As illustrated in Fig. 1, the wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

In addition, in LTE or NR, a carrier aggregation function using a broad band is supported in order to secure data resources. In the carrier aggregation function, wide band data resources can be allocated by aggregating a plurality of component carriers. For example, the bandwidth of 100 MHz can be used by bundling a plurality of bandwidths of 20 MHz.

In addition, in the 3GPP standardization, a new device type as a reduced capability NR device (hereinafter, also referred to as "RedCapUE") is being discussed that has lower cost and complexity compared with an eMBB (enhanced Mobile Broadband) device or a URLLC (Ultra-Reliable and Low Latency Communications) device.

For example, the maximum bandwidth supported by the RedCapUE may be small. For example, in FR1 (Frequency Range 1), the maximum bandwidth of the RedCapUE during and after the initial access may be 20 MHz. For example, in FR2 (Frequency Range 2), the maximum bandwidth of the RedCapUE during and after the initial access may be 100 MHz.

For example, the RedCapUE may support a smaller number of reception branches. For example, the number of branches supported by the RedCapUE may be 1 or 2. In addition, the maximum number of MIMO layers supported by the RedCapUE may be small. For example, the number of MIMO layers supported by the RedCapUE may be 1 or 2. In addition, the modulation order supported by the RedCapUE may be small. For example, supporting of 256QAM (Quadrature amplitude modulation) in FR1 may be optional for the RedCapUE.

In addition, with respect to the RedCapUE, supporting of HD-FDD (Half-Duplex Frequency Division Duplex) is being discussed in order to reduce the complexity. In the full-duplex FDD, the DL carrier and the UL carrier are allocated in different frequencies, and the simultaneous transmission and reception can be performed. On the other hand, in the HD-FDD (Half-Duplex Frequency Division Duplex), the DL carrier and the UL carrier are allocated in different frequencies, the simultaneous transmission and reception cannot be performed, and the DL-UL switching time is required. The duplexer can be eliminated in the HD-FDD and a switch and an additional filter can be used instead.

Further, positioning of the terminal 20 according to the LMF (Location Management Function) in the 3GPP release 16 or 17 Uu interface is performed according to the methods described in 1) to 3) below (refer to Non-Patent Document 2, Non-Patent Document 3, and Non-Patent Document 4).
1) Method based on DL-TDOA (Time Difference of Arrival)
2) Method based on UL-TDOA
3) Method based on multi-RTT (Round Trip Time).

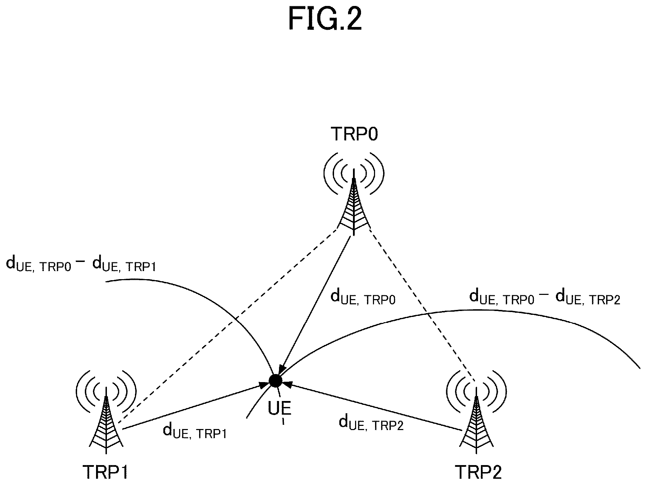

Fig. 2 is a drawing illustrating an example (1) of positioning. As illustrated in Fig. 2, the location information of the UE may be calculated based on DL-TDOA. The location of the UE may be estimated based on DL-RSTD (Received Signal Time Difference) in which the UE measures DL wireless signals transmitted from a plurality of NR TRPs. The geographical locations of the TRPs and the DL transmission timings at the TRPs may be used in the estimation. Furthermore, the location of the UE may be estimated based on RSRP (Reference Signal Received Power) of DL-PRS (Positioning Reference Signal) in addition to DL-RSTD.

In a method based on DL-TDOA, the location of the UE may be calculated by the following procedure.
1) The gNB transmits DL-PRS from each TRP to the UE
2) The UE reports DL-RSTD that is a measurement result to the GW and/or gNB and/or LMF by using the LPP (LTE Positioning Protocol)
3) The gNB reports the timing information related to the TRP to the LMF by using the NRPPa (NR Positioning Protocol A)
4) The LMF calculates the location of the UE based on the above-described information reported by the UE and the gNB

For example, as illustrated in Fig. 2, the location of the UE may be calculated based on the geographical location and the DL transmission timing of each of the TRPs by measuring the delay between the UE and the TRP0, the delay between the UE and the TRP1, and the delay between the UE and the TRP2.

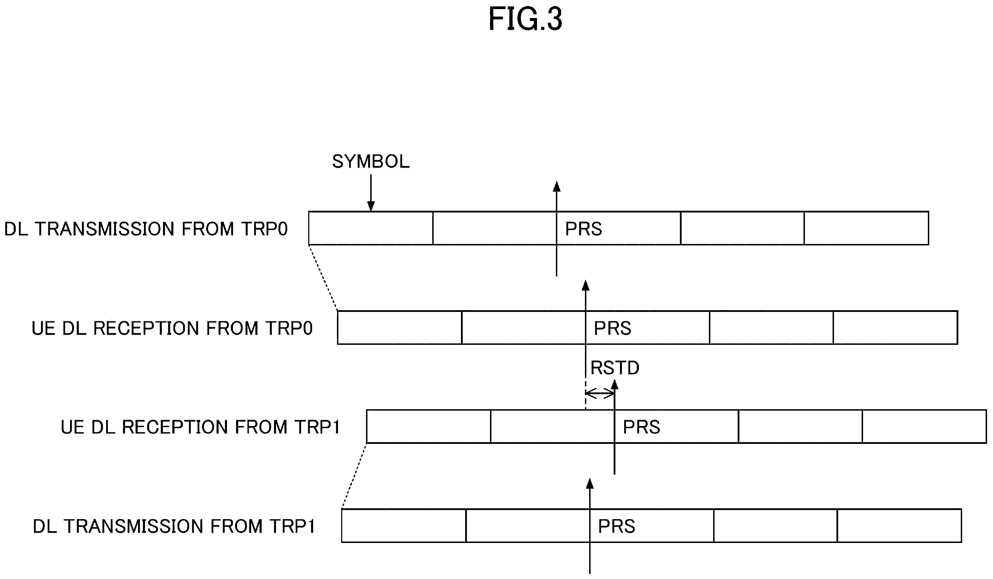

Fig. 3 is a drawing illustrating an example of measuring DL-RSTD. Hereinafter, "and/or" will be also described as "/". As illustrated in Fig. 3, the DL-RSTD may refer to the time difference, measured by the UE, between the time point of the start of reception of a DL subframe from a reference TRP (TRP0 in Fig. 3) and the time point of the start of reception of a DL subframe from another TRP. The start of a subframe may be determined by detecting the DL-PRS.

The transmission timing of each TRP is not required to be the same.

Regarding the calculation of the location of the UE according to DL-TDOA, information described in 1) to 5) below may be reported from the UE to the GW/gNB/LMF.
1) PCI (Physical Cell ID), GCI (Global Cell ID), and TRP-ID in each measurement
2) DL-RSTD measurement result
3) DL-PRS-RSRP measurement result
4) Measurement time (time stamp)
5) Quality of each measurement

Regarding the calculation of the location of the UE according to DL-TDOA, information described in 1) to 6) below may be reported from the gNB to the LMF.
1) PCI, GCI, and TRP-ID of TRPs controlled by the gNB
2) Timing information of TRPs controlled by the gNB
3) DL-PRS configuration of TRPs controlled by the gNB
4) SSB-related information, such as SSB time and frequency resources, of TRPs controlled by the gNB
5) Spatial direction information of the DL-PRS of TRPs controlled by the gNB
6) Geographical coordinates information of TRPs controlled by the gNB

DL-RSTD may be defined as the time difference, measured by the UE, between the time point of the start of reception of a DL subframe from a reference TRP and the time point of the start of reception of a DL subframe from another TRP. A plurality of DL-PRS resources may be used for determining the time point of the start of reception of a subframe.

The SFN initialization time of the TRPs may be reported as a report of the timing information related to the TRPs controlled by the gNB. The SFN initialization time is the beginning time of SFN0.

The ellipsoid point with altitude and the ellipsoid with uncertainty range may be reported as a report of the geographical coordinates information of TRPs controlled by the gNB (refer to Non-Patent Document 5). For example, the latitude, longitude, altitude, direction of altitude, uncertainty range of altitude, or the like, may be reported.

As illustrated in Fig. 2, the location information of the UE may be calculated based on UL-TDOA. The location of the UE may be estimated based on the UL-RTOA (Relative Time of Arrival) in which the UL wireless signal transmitted from the UE is measured by a plurality of NR TRPs. Other configuration information items may be used for the estimation. Furthermore, the location of the UE may be estimated based on RSRP of UL-SRS (Sounding Reference Signal) in addition to the UL-RTOA.

In a method based on UL-TDOA, the location of the UE may be calculated by the following procedure.
1) The UE transmits SRS to a plurality of TRPs
2) The gNB reports UL-RTOA that is a measurement result and the geographical coordinates of the TRPs to the LMF by using NRPPa
3) The LMF calculates the location of the UE based on the above-described information reported by the gNB

For example, as illustrated in Fig. 2, the location of the UE may be calculated based on the geographical location and the UL transmission timing of each of the TRPs by measuring the RTOA from the UE to the TRP0, the RTOA from the UE to the TRP1, and the RTOA from the UE to the TRP2.

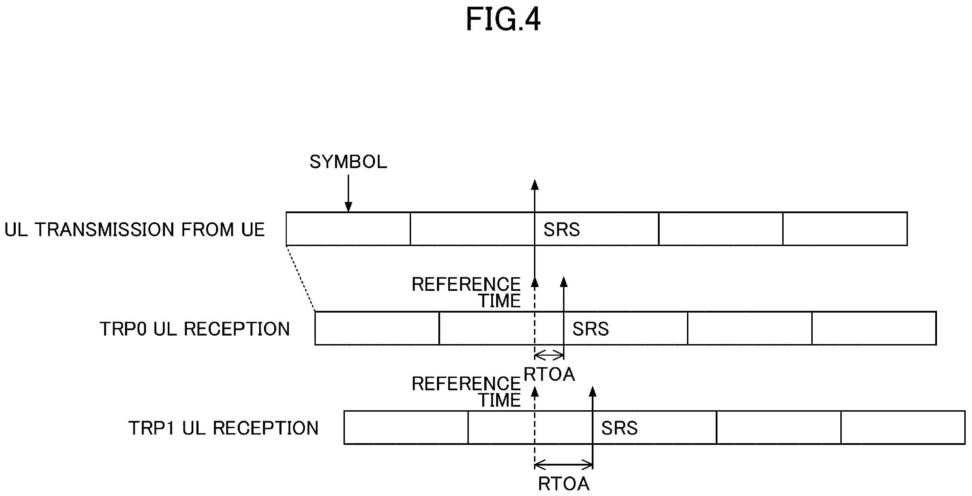

Fig. 4 is a drawing illustrating an example of measuring UL-RTOA. As illustrated in Fig. 4, the UL-RTOA may refer to the time difference between the time point of the start of reception of a UL subframe including SRS at the TRP and the RTOA reference time at which the UL is transmitted.

Regarding the calculation of the location of the UE according to UL-TDOA, information described in 1) to 9) below may be reported from the gNB to the LMF.
1) PCI, GCI, and TRP-ID of TRPs controlled by the gNB
2) SSB-related information, such as SSB time and frequency resources, of TRPs controlled by the gNB
3) Geographical coordinates information of TRPs controlled by the gNB
4) NCGI (NR Cell Global Identifier) and TRP-ID of the measurement
5) UL-RTOA
6) RSRP of UL-SRS
7) Time of the measurement
8) Quality of each measurement
9) Beam information of each measurement

The UL-RTOA may be defined as the time difference between the time point of the start of reception of a UL subframe including SRS at the TRP and the RTOA reference time at which the UL is transmitted. The gNB may report the geographical coordinates of the TRP to the LMF by using NRPPa.

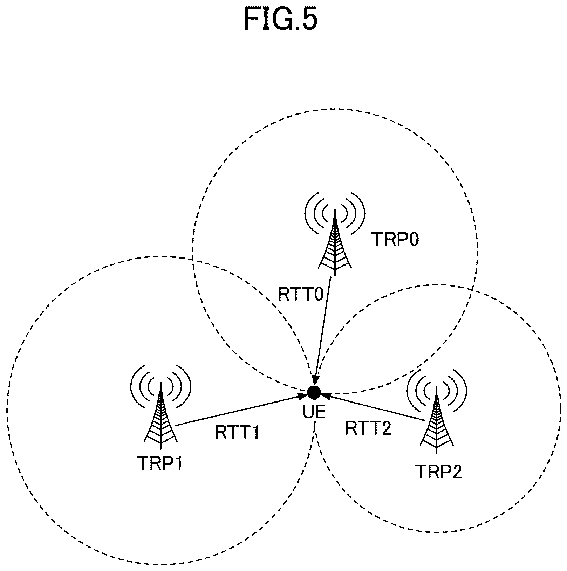

Fig. 5 is a drawing illustrating an example (2) of positioning. As illustrated in Fig. 5, the location information of the UE may be calculated based on a plurality of RTTs. The location of the UE may be estimated based on the UE/gNB reception-transmission time difference measurement using DL-PRS and UL-SRS. DL-PRS-RSRP and UL-SRS-RSRP may be used for the estimation. The LMF may determine the RTTs by using the UE/gNB reception-transmission time difference measurement.

In a method based on multi-RTT, the location of the UE may be calculated by the following procedure.
1) The gNB transmits DL-PRS from each TRP to the UE
2) The UE transmits SRS to a plurality of TRPs
3) The UE reports the UE reception-transmission time difference to the GW and/or gNB and/or LMF by using the LPP.
4) The gNB reports the gNB reception-transmission time difference to the LMF by using the NRPPa.
5) The LMF calculates the location of the UE based on the above-described information reported by the UE and the gNB

For example, as illustrated in Fig. 5, the location of the UE may be calculated based on the geographical location of each of the TRPs by measuring the RTT between the UE and the TRP0, the RTT between the UE and the TRP1, and the RTT between the UE and the TRP2.

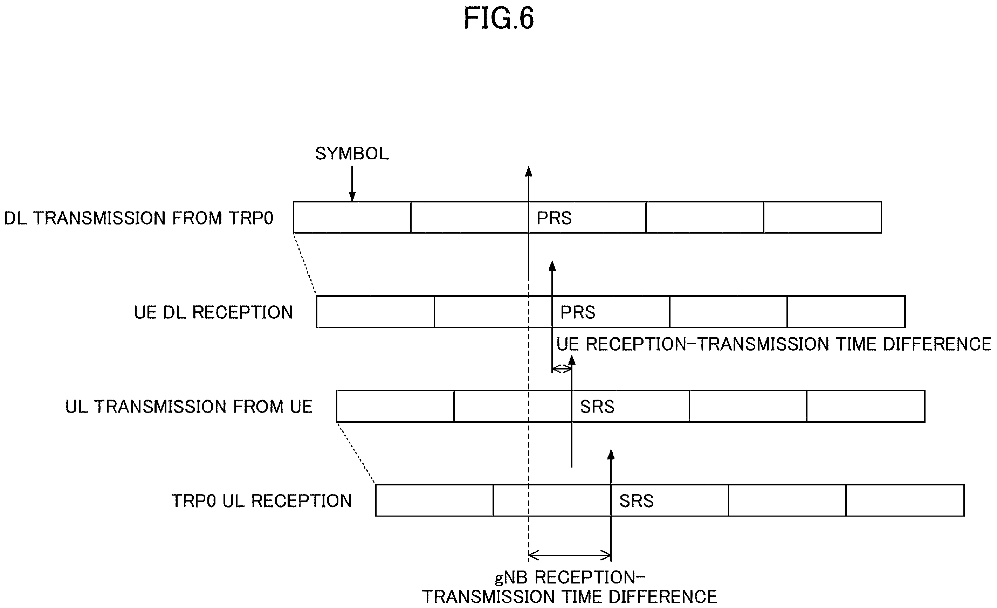

Fig. 6 is a drawing illustrating an example of measuring RTT. As illustrated in Fig. 6, with respect to the UE reception-transmission time difference, the time difference between the timing of receiving a DL subframe from the TRP and the timing of transmitting a UL subframe may be referred to. In addition, as illustrated in Fig. 6, with respect to the gNB reception-transmission time difference, the time difference between the timing of receiving a UL subframe by the TRP and the timing of transmitting a DL subframe by the TRP may be referred to.

Regarding the calculation of the location of the UE according to a plurality of RTTs, information described in 1) to 5) below may be reported from the UE to the GW/gNB/LMF.
1) PCI, GCI, and TRP-ID in each measurement
2) DL-PRS-RSRP measurement result
3) UE reception-transmission time difference measurement result
4) Time of the measurement
5) Quality of each measurement

Regarding the calculation of the location of the UE according to RTTs, information described in 1) to 9) below may be reported from the gNB to the LMF.
1) PCI, GCI, and TRP-ID of TRPs controlled by the gNB
2) Timing information of TRPs controlled by the gNB
3) DL-PRS configuration of TRPs controlled by the gNB
4) SSB-related information, such as SSB time and frequency resources, of TRPs controlled by the gNB
5) Spatial direction information of the DL-PRS of TRPs controlled by the gNB
6) Geographical coordinates information of TRPs controlled by the gNB
7) NCGI and TRP-ID of the measurement
8) gNB reception-transmission time difference
9) RSRP of UL-SRS
10) UL-AoA (Angle of Arrival), for example, azimuth and elevation
11) Time of the measurement
12) Quality of the measurement
13) Beam information of the measurement

It is to be noted that the definitions of the UE reception-transmission time difference and the gNB reception-transmission time difference may be referred to in Non-Patent Document 6. The geographical coordinates of the TRP may be reported in the same way as the DL-RSTD.

As described above, in the positioning according to the Uu interface, the positioning methods have been applied according to the DL-TDOA, the UL-TDOA, and the multi-RTT that respectively use the RSTD, the RTOA, and the reception-transmission time difference that indicate the propagation delay between the UE and the TRP.

Enhancement of UE positioning is being discussed in NR. In addition, positioning for a RedCap UE is being discussed. In addition, further bandwidth reduction for a RedCap UE is being discussed.

For example, as described above, with respect to the RedCap UE, there is a case in which the maximum bandwidth is decreased from 100 MHz to 20 MHz in FR1 and is decreased from 400 MHz to 100 MHz in FR2. In addition, as described above, with respect to the RedCap UE, there is a case in which the number of antennas is decreased from 2 to 1.

Here, there is a possibility that the positioning without using the positioning reference signal (SRS for positioning or the like) will be specified for the RedCap UE from the perspective of either implementation cost or hardware.

Table 1 illustrates an example of a positioning method.

**[Table 1]**

| Positioni ng method | E-CID | TDOA | | Multi-RTT | Angle | |
|---|---|---|---|---|---|---|
| | | DL-TDOA | UL-TDOA | | DL-AoD | UL-AoA |
| Signal | TA type2 (PRACH preamble) SSB/CSI for RRM | DL-PRS | SRS/SR S for pos | DL-PRS/SRS for pos | DL-PRS | SRS/SRS for pos |
| Obtained paramet er example | RSRP/RS RQ | RSRP/ DL RSTD | RSRP/ UL RTOA | RSRP/UE Rx-Tx time difference/g NB Rx-Tx time difference | RSRP/AoD/ ZoD | RSRP/AoA/ ZoA |

As illustrated in Table 1, signals used in the positioning according to E-CID (Enhanced Cell ID) are TA type 2 using PRACH preamble and SSB/CSI for RRM, and RSRP/RSRQ is obtained.

As illustrated in Table 1, the signal used in the positioning according to DL-TDOA is DL-PRS, and RSRP/DL-RSTD is obtained. The signal used in the positioning according to UL-TDOA is SRS/SRS for positioning, and RSRP/UL-RTOA is obtained.

As illustrated in Table 1, the signal used in the positioning according to multi-RTT is DL-PRS/SRS for positioning, and RSRP/UE Rx-Tx time difference/gNB Rx-Tx time difference is obtained.

As illustrated in Table 1, the signal used in the positioning according to DL-AoD is DL-PRS, and RSRP/AoD (Angle of Departure)/ZoD (Zenith angle of Departure) is obtained. The signal used in the positioning according to UL-AoA is SRS/SRS for positioning, and RSRP/AoA (Angle of Arrival)/ZoA (Zenith angle of Arrival) is obtained.

In the 3GPP release 16/17, the positioning RS is essential for a positioning method other than UL-TDOA and UL-AoA among the NR positioning methods. In NR E-CID, RSRP/RSRQ can be obtained according to TA type 2 using PRACH preamble and SSB/CSI-RS.

Here, SSB is expected to be used for positioning as a signal that can be obtained by all UEs.

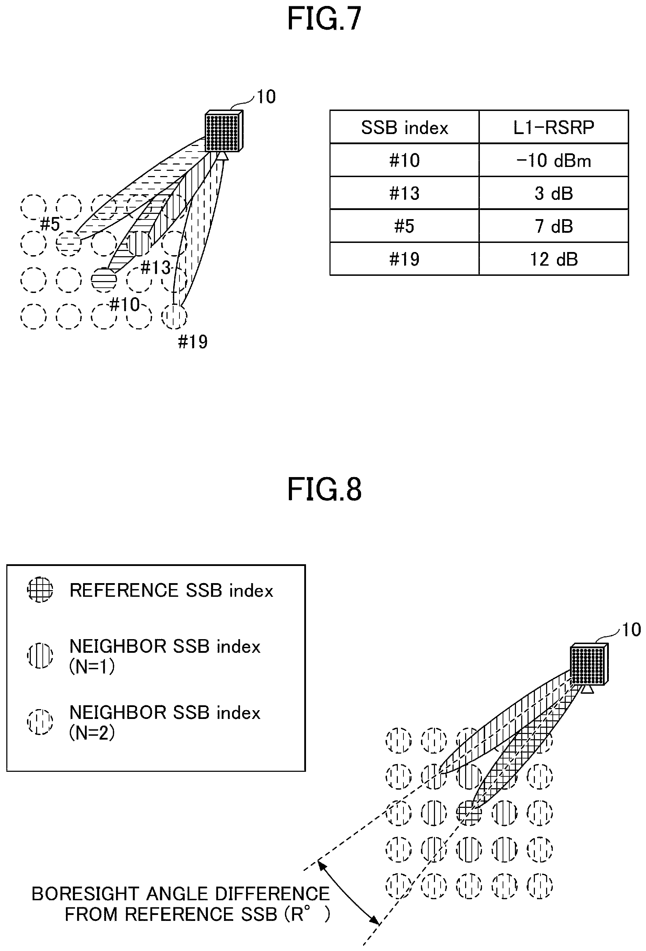

Fig. 7 is a drawing illustrating an example (1) of an SSB beam in an embodiment of the present invention. In a positioning operation according to SSB beams in the 3GPP release 17, as illustrated in Fig. 7, for example, N (=1, 2, 4) higher level L1-RSRPs and beam indexes can be reported. The beam indexes are reported in descending order of RSRP, and there is no specification related to positional relation. In addition, with respect to the beam granularity, while up to 256 PRSs can be configured, only up to 64 SSBs can be configured. Values from 0 to 255 are defined for a parameter dl-PRS-ID-r16, and a parameter maxNrofSSBs-r16 is 64 (refer to Non-Patent Document 7).

In other words, the 3GPP release 17 positioning operation according to SSB beams is not sufficient in terms of the number of reports, reportable beams, and measurement granularity. Accordingly, a new positioning calculation method using SSBs will be described below. For example, accuracy improvement will be achieved at the time of performing angle-based positioning using SSB beams.

For example, the UE may expect that the measurement for positioning using SSBs is to be indicated. In addition, for example, the UE may expect that angle-based positioning using gNB transmission beams is to be indicated. In addition, for example, the UE may expect that measurement and reporting of a plurality of neighboring SSB indexes are to be indicated in the non-group based SSB beam reporting. In addition, for example, the UE may expect that measurement and reporting of a plurality of neighboring SSB indexes are to be indicated in the group based SSB beam reporting. It is to be noted that an embodiment of the present invention is not limited to be applied to the RedCap UE and may be applied to the normal non-RedCap UE.

The UE may expect that the measurement for positioning using SSBs is to be indicated. In addition, the UE may expect that CSI-RSs are to be used instead of SSBs. The measurement for positioning may specifically mean, for example, the following metrics.

DL-TDOA, UE Rx-Tx time difference, RSRP, RSRQ, or AoD

The RTT measurement UL signal may be expected to be any signal (for example, SRS, SRS for positioning, DM-RS, PRACH, or the like).

The UE capability related to the positioning using SSBs may be specified and the UE may expect that reporting of the UE capability is to be indicated by the network. For example, the UE capability may be a capability described in the following 1) to 5).
1) Whether or not to support SSB positioning. This capability may be specified for each metric.
2) Positioning available measurement period. The network may be expected to perform a configuration or re-configuration from among the capabilities.
3) The number of receivable gNB transmission beams and the number of configurable UE reception beams.
4) The number of SSB or CSI-RS indexes that can be reported
5) Condition for SSBs defined as neighboring beams (definition rule, the number of neighboring beams that can be reported, or the like)

In addition, a condition may be specified for the SCS of SSBs used for positioning using gNB transmission beams. In a case of a large SCS, the larger the measurement bandwidth is, the higher the timing positioning accuracy is. For example, in a case where the SCS is equal to or greater than 30 kHz, the SSB may be usable for positioning. For example, in addition to the SCS being 15 kHz, 30 kHz, 120 kHz, and 240 kHz, a new SCS intended to be used for positioning may be defined.

In addition, the UE may explicitly or implicitly report, to the network, a reference signal, a signal, or a channel used for positioning using gNB transmission beams. In a case of implicitly reporting to the network, the report may be included in the measurement report corresponding to the measurement indication from the network.

In addition, the UE may report, to the network, a reference signal and/or SSB SCS used for positioning using gNB transmission beams as the positioning integrity.

In addition, the network may indicate, to the UE, a reference signal and/or SSB SCS used for positioning using gNB transmission beams.

According to the above-described operation, the UE that does not support the positioning RS can also perform positioning.

The UE may expect that the angle-based positioning using gNB transmission beams is to be indicated. The UE may perform transmission beam measurement using SSB or CSI-RS and may expect that the SSB or CSI-RS index and RSRP information are to be reported from the UE or gNB to the LMF. In the 3GPP release 17 ECID, after narrowing down the area by cell IDs, RSRP is used as assistance information.

The UE may report, to the network, not the SSB or CSI-RS index, but the angle information itself (that is, the beam boresight) and/or a value with a certain degree of angle width information. The coordinate system may be any one of LCS (local coordinate system) or GCS (global coordinate system), or the like.

The UE may expect that a different operation is to be indicated by the network depending on the allocated frequencies of SSB. For example, SSBs with the same index located in different frequencies may be processed as the same measurement results, or may be processed as separate measurement results. According to the above-described operation, possibility of varying beam directions and characteristics depending on the frequencies can be taken into account.

The UE may expect to be indicated to perform angle-based positioning such as DL-AoD by using the SSB index and the RSRP information of beams, and to transmit a report to the network. Alternatively, the UE may expect to be indicated to report the measured SSB index and the RSRP information to the network. In addition, the UE may expect to be indicated to transmit a report as timing-based positioning assistance information in addition to the angle-based positioning.

In addition, specifications with respect to the number of indexes and/or frequencies for supporting the positioning according to the gNB transmission beams may be configured. For example, in a case where beams the number of which is equal to or greater than an integer N are configured, it may be specified that the beams can be used for the positioning function. For example, positioning is not performed in a case where eight beams with which sufficient angle resolution cannot be expected are configured, and positioning based on the beams may be supported in a case where 64 beams are configured.

In addition, use of the positioning function may be specified for each of FR1 or FR2. For example, positioning based on the beams may be supported only in a case of an operation in FR2 with strong angular directivity.

In addition, the UE may expect that the SSB indexes to be measured are to be indicated by the network. For example, the UE may expect that the SSB indexes to be indicated to be measured are to be limited by the past location information and/or beam information. For example, the UE may expect that the arrival angle estimation according to the two-step beam sweeping is to be indicated in which, after all beams are measured first, and then, beams that are neighboring the beam with large power are measured again.

According to the above-described operation, even the UE that does not support the positioning RS can perform positioning using angle information.

The UE may expect that measurement and reporting of a plurality of neighboring SSB indexes are to be indicated in the non-group based SSB beam reporting. In a case where the neighboring SSBs cannot be used, positioning using only the reference SSB may be indicated. The neighboring SSB may be expected to be defined as, for example, the following Definition 1) to Definition 3). The number of neighboring SSBs may be specified by the technical specifications, or may be expected to be indicated or configured by the network based on the UE capability.
Definition 1) SSB indexes that are spatially neighboring the reference SSB, the number of the SSB indexes being equal to or less than N (N is equal to or greater than zero (0)).
Definition 2) SSB indexes whose boresight angle difference from the reference SSB is equal to or less than R (R is equal to or greater than zero (0)), the boresight angle of each SSB index being indicated to the UE as assistance data
Definition 3) SSB indexes selected from among the SSB subset that is separately configured by being associated with the reference SSB, the number of the SSB indexes being equal to or greater than M (M is equal to or greater than zero (0))

Fig. 8 is a drawing illustrating an example (2) of an SSB beam in an embodiment of the present invention. The neighboring SSB indexes according to Definition 1) may be defined as illustrated in Fig. 8. As illustrated in Fig. 8, in a case where N is equal to 1, the neighboring SSBs include the reference SSB index and neighbor SSB indexes where N=1. In addition, in a case where N is equal to 2, the neighboring SSBs include the reference SSB index, neighbor SSB indexes where N=1, and neighbor SSB indexes where N=2. In addition, the boresight angle difference R from the reference SSB in Definition 2) may be defined as illustrated in Fig. 8.

It is to be noted that the case in which neighboring SSBs cannot be used may a case in which N, R, and M are all zero (0).

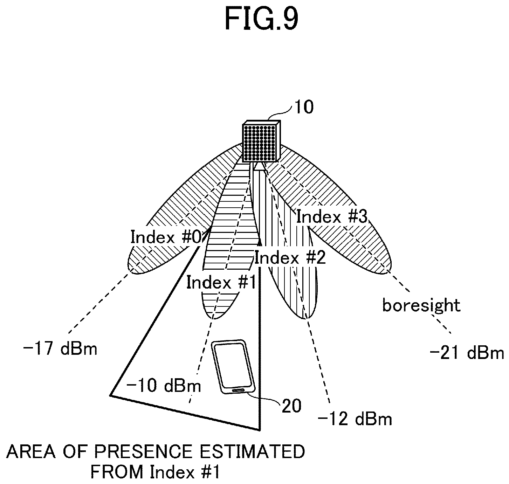

Fig. 9 is a drawing illustrating an example (3) of an SSB beam in an embodiment of the present invention. As illustrated in Fig. 9, the angle estimation that is finer than the beam granularity may be performed by comparing the RSRPs among the neighboring SSB indexes. In an example illustrated in Fig. 9, the SSB index #0 is -17 dBm, the SSB index #1 is -10 dBm, the SSB index #2 is -12 dBm, and the SSB index #3 is -21 dBm; and the finer location of the UE may be estimated in the area of presence estimated from the SSB index #1 with the highest RSRP by comparing each RSRP.

The measurement result according to the beam management may be expected to be reported from the UE or the gNB to the LMF. A report IE used for positioning may be separately specified in the technical specifications. In addition, the UE may expect that measurement and reporting of SSB beams from a plurality of TRPs are to be indicated. In addition, the UE may expect that positioning calculation is to be performed according to a plurality of measurement results including the neighboring SSBs by the UE and that a result of the calculation is to be reported to the network.

The UE may expect that reporting of RSRP of the neighboring beams is to be indicated in addition to the beams that are to be indicated to be reported in the beam management. The number of reportable beams may be enhanced from N={1, 2, 4}. The reporting format may be as described in the following Format 1) or Format 2). Hereinafter, as an example, in Fig. 8, the reference SSB is defined as a higher level beam, and neighboring 8 beams corresponding to neighbor SSBs in a case of N=1 are defined as neighboring beams of the higher level beam.
Format 1) The UE may expect that M (0 =< M =< N) beams with higher RSRPs and neighboring beams of each of the M beams are to be reported. N may be the number of beams that can be reported, or may be the number of all beams that can be configured.
Format 1-1) The absolute value may be reported only with respect to the beam with the highest RSRP, and RSRPs of other beams may be reported by using differences from the highest beam.
Format 1-2) Absolute values may be reported with respect to the M beams with higher RSRPs, and RSRPs of neighboring beams associated with each of the M beams may be reported by using differences.
Format 1-2-1) The differences may be differences from the beam with the highest RSRP.
Format 1-2-2) The differences may be differences from each of the M beams with higher RSRPs.
Format 1-3) All of the RSRPs may be reported by using absolute values.
Format 2) Neighboring beams may be included in the report with high probability by enhancing the number N={1, 2, 4} of the reportable beams to increase N. The network may perform association with neighboring beams to be used for positioning calculation.
Format 2-1) The absolute value may be reported only with respect to the beam with the highest RSRP, and RSRPs of other beams may be reported by using differences from the highest beam.
Format 2-2) RSRPs may be reported by using absolute values.

In the above-described Format 1), the UE may expect that the SSB indexes are to be reported according to the following options related to the priority order.
Option A) Priority is not provided in the report. All of the neighboring SSB beam indexes may be reported by allowing duplications. According to Option A), at the time of positioning calculation, calculations can be performed by only referring to the beam sequence and the reporting can be simplified.
Option B) Higher level SSB beam indexes may be prioritized. In the reporting of the neighboring SSB beam indexes, the SSB indexes that have been reported in the reporting of the higher level beams are not required to be reported. According to Option B), the data size can be reduced.
Option C) The higher level SSB indexes and the neighboring SSB beam indexes associated with the higher level beam of even higher RSRP may be prioritized. In the reporting of the neighboring SSB beam indexes, the SSB indexes that have been reported for the higher level beams, and the SSB indexes that have been reported in the reporting of the neighboring SSB beam indexes associated with beams with even higher RSRP are not required to be reported. According to Option C), the data size can be further reduced than Option B).

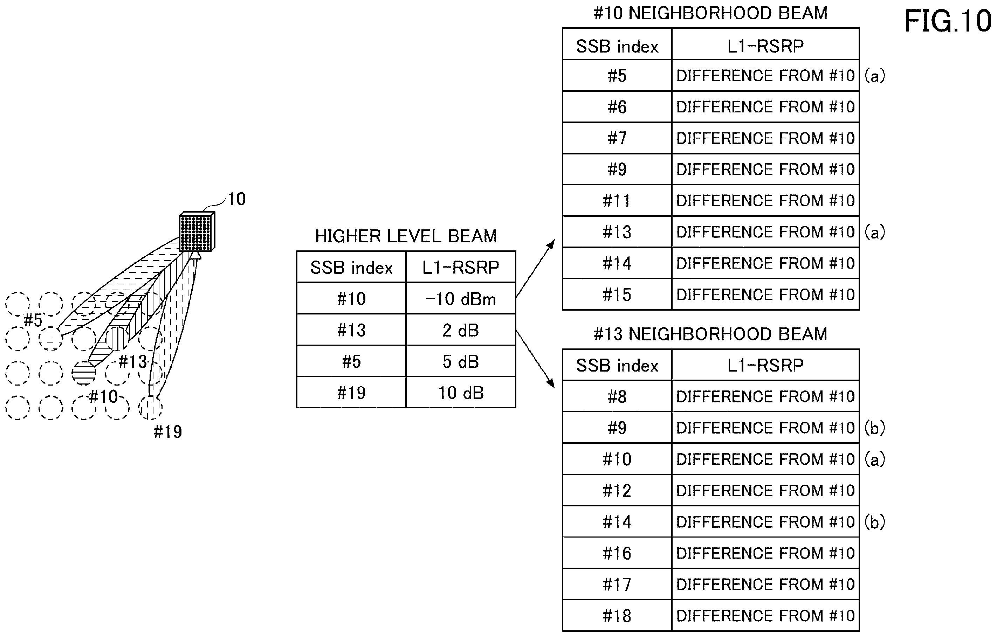

Fig. 10 is a drawing illustrating an example (1) of reporting the measurement result in an embodiment of the present invention. In Fig. 10, with respect to the SSB indexes, the upper left is defined as #0, the ones below #0 are defined as #1, #2, and #3 in this order, and the one to the right of #0 is defined as #4, and so on. Fig. 10 is an example illustrating information to be reported according to the above-described Format 1-1). As illustrated in Fig. 10, absolute value may be reported with respect to the beam #10 with the highest RSRP, and RSRPs of other beams may be reported by using differences from the highest beam. The higher level beams are #10, #13, #5, and #19, and neighboring beams of each of the higher level beams may be reported. In an example illustrated in Fig. 10, neighboring beams of each of the two higher level beams are reported. In other words, Fig. 10 is an example with a configuration of M = 2.

(a) illustrated in Fig. 10 indicates information that is not transmitted in the above-described Option B) and the above-described Option C). (b) illustrated in Fig. 10 indicates information that is not transmitted in the above-described Option C). In other words, in the above-described Option C), (a) and (b) are not transmitted. Option B) and Option C) may be applied to the Format 1-2) and Format 1-3) in the same manner.

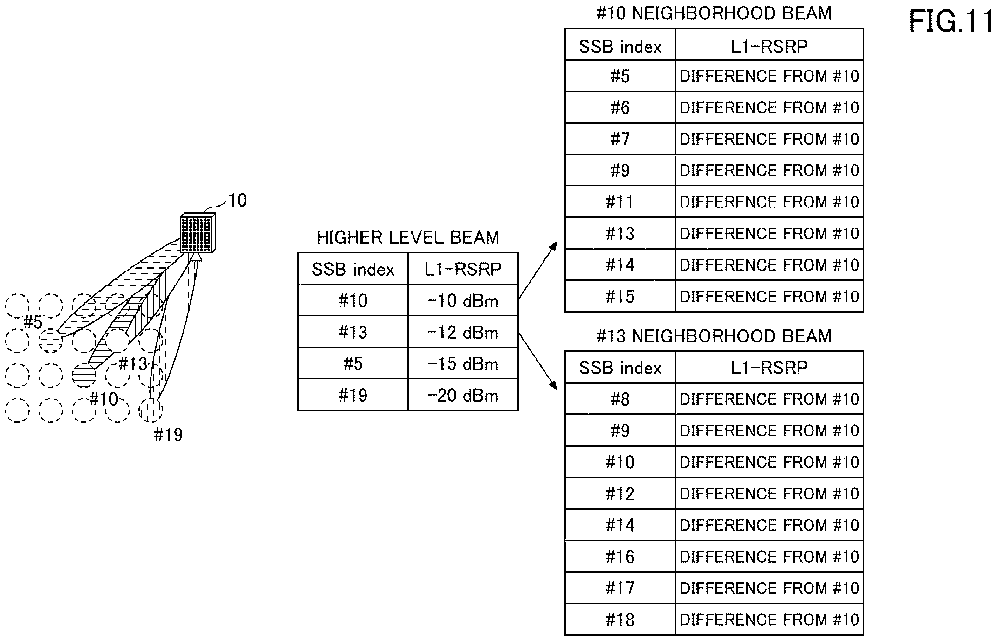

Fig. 11 is a drawing illustrating an example (2) of reporting the measurement result in an embodiment of the present invention. Fig. 11 illustrates an example indicating information to be reported according to the above-described Format 1-2-1). As illustrated in Fig. 11, absolute values may be reported with respect to only beams #10, #13, #5, and #19 with higher level RSRPs, and RSRPs of other beams may be reported by using differences from the highest beam. The higher level beams are #10, #13, #5, and #19, and neighboring beams of each of the higher level beams may be reported. In an example illustrated in Fig. 11, neighboring beams of each of the two higher level beams are reported. In other words, Fig. 10 is an example with a configuration of M = 2.

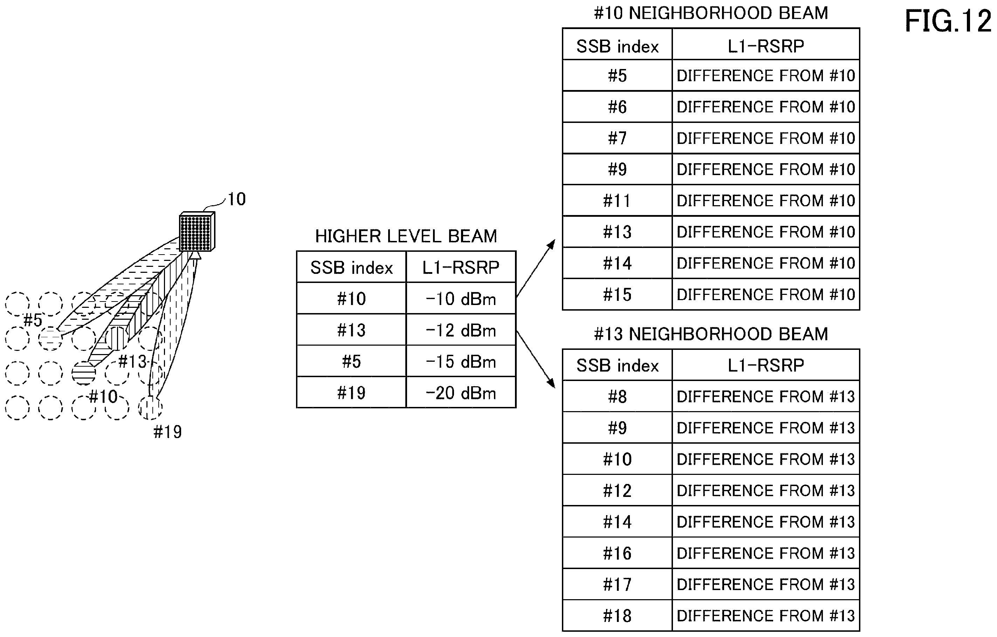

Fig. 12 is a drawing illustrating an example (3) of reporting the measurement result in an embodiment of the present invention. Fig. 12 illustrates an example indicating information to be reported according to the above-described Format 1-2-2). As illustrated in Fig. 12, absolute values may be reported with respect to only beams #10, #13, #5, and #19 with higher level RSRPs, and RSRPs of other beams may be reported by using differences from each of the higher level beams. The higher level beams are #10, #13, #5, and #19, and neighboring beams of each of the higher level beams may be reported. In an example illustrated in Fig. 12, neighboring beams of each of the two higher level beams are reported. In other words, Fig. 10 is an example with a configuration of M = 2.

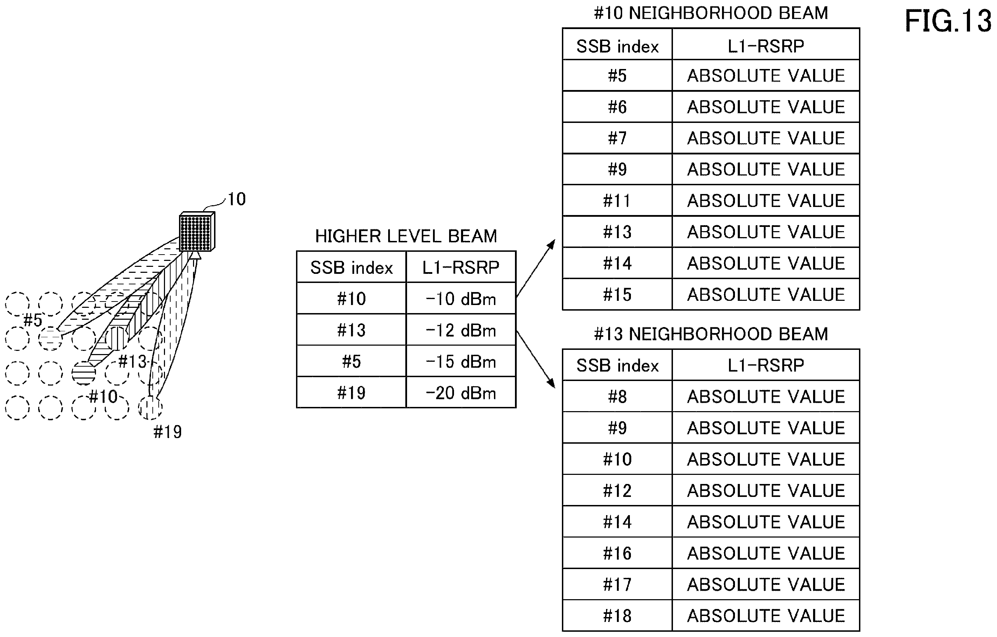

Fig. 13 is a drawing illustrating an example (4) of reporting the measurement result in an embodiment of the present invention. Fig. 13 illustrates an example indicating information to be reported according to the above-described Format 1-2-1). As illustrated in Fig. 13, absolute values may be reported with respect to beams #10, #13, #5, and #19 with higher level RSRPs, and absolute values may be reported with respect to the RSRPs of other beams. The higher level beams are #10, #13, #5, and #19, and neighboring beams of each of the higher level beams may be reported. In an example illustrated in Fig. 13, neighboring beams of each of the two higher level beams are reported. In other words, Fig. 13 is an example with a configuration of M = 2.

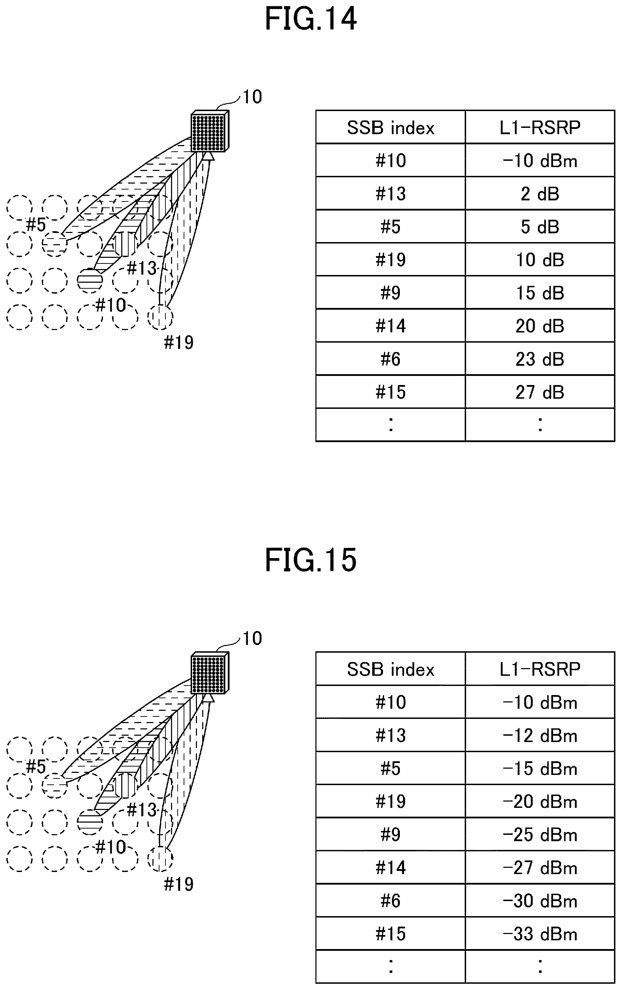

Fig. 14 is a drawing illustrating an example (5) of reporting the measurement result in an embodiment of the present invention. Fig. 14 illustrates an example indicating information to be reported according to the above-described Format 2-1). As illustrated in Fig. 14, the absolute value may be reported with respect to beam #10 with the highest RSRP, and RSRPs of other beams may be reported by using differences from the highest beam.

Fig. 15 is a drawing illustrating an example (6) of reporting the measurement result in an embodiment of the present invention. Fig. 15 illustrates an example indicating information to be reported according to the above-described Format 2-2). As illustrated in Fig. 15, the absolute value may be reported with respect to beam #10 with the highest RSRP, and absolute values may be reported with respect to the RSRPs of other beams.

According to an operation described above, angle estimation that is finer than the SSB beam index granularity can be performed.

The UE may expect that measurement and reporting of a plurality of neighboring SSB indexes are to be indicated in the group-based SSB beam reporting. The measurement result according to the beam management may be expected to be reported from the UE or the gNB to the LMF. A report IE used for positioning may be separately specified in the technical specifications. In addition, the UE may expect that measurement and reporting of SSB beams from a plurality of TRPs are to be indicated. The definition of the SSB group may be expected to be the following 1) to 3).
1) The beam index group that is defined in the group-based beam management.
2) The beam group that is defined in CSI-SSB-ResourceSet (refer to Non-Patent Document 7).
3) The neighboring beam group that is newly defined as a beam index group for positioning. The group unit to be reported may be expected to be indicated or configured by the network.

In addition, the UE may expect that positioning calculation is to be performed according to a plurality of measurement results including the neighboring SSBs by the UE and that a result of the calculation is to be reported to the network.

The UE may expect that measurement and reporting are to be indicated with respect to the group (that is, neighboring beams). The reporting format may be as described in the following Format 3) or Format 4).
Format 3) The reporting may be performed in the descending order of RSRP or RSRQ.
Format 3-1) The absolute value may be reported only with respect to the beam with the highest RSRP, and RSRPs of other beams may be reported by using differences from the highest beam.
Format 3-2) Absolute values may be reported with respect to all beams.
Format 4) Absolute values may be reported in the index order in the group.

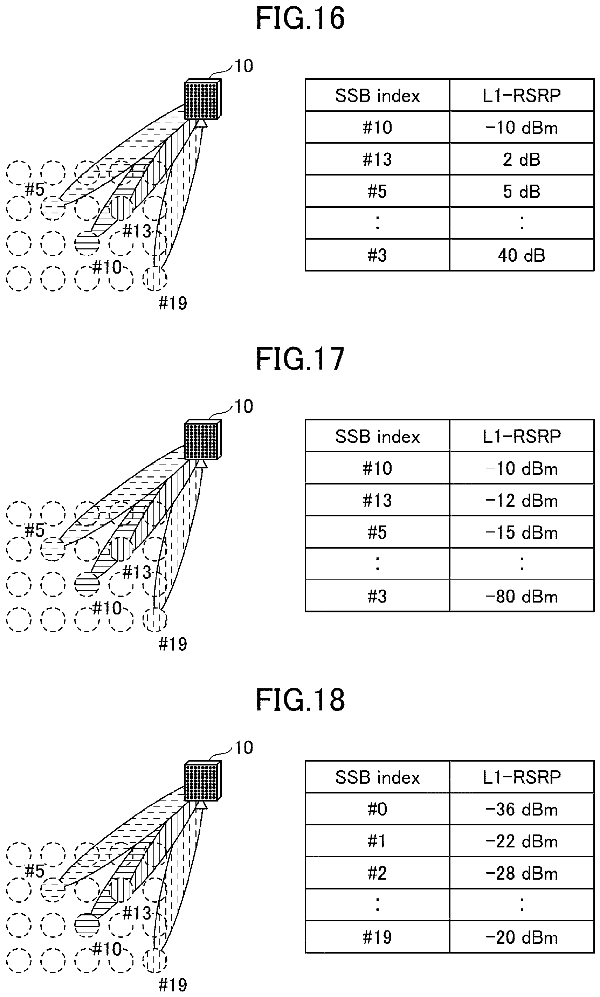

Fig. 16 is a drawing illustrating an example (7) of reporting the measurement result in an embodiment of the present invention. Fig. 16 illustrates an example of reporting according to the above-described Format 3-1) in a case where the indexes #0 to #19 belong to one group. Reporting is performed in the order of RSRP, an absolute value is reported with respect to the index #10 with the highest RSRP, and differences from the highest value are reported with respect to other indexes.

Fig. 17 is a drawing illustrating an example (8) of reporting the measurement result in an embodiment of the present invention. Fig. 17 illustrates an example of reporting according to the above-described Format 3-2) in a case where the indexes #0 to #19 belong to one group. Reporting is performed in the order of RSRP, and an absolute value is reported with respect to each of the indexes.

Fig. 18 is a drawing illustrating an example (9) of reporting the measurement result in an embodiment of the present invention. Fig. 18 illustrates an example of reporting according to the above-described Format 4) in a case where the indexes #0 to #19 belong to one group. Reporting is performed in the index order, and absolute values are reported with respect to RSRPs.

It is to be noted that "PRS (Positioning Reference Signal)" may be replaced with "DL-PRS", "UL-PRS (for example, SRS for positioning or SRS)", or the like.

It is to be noted that "SRS" may be replaced with "SRS for MIMO", "SRS for positioning", or the like.

It is to be noted that SSB (SS/PBCH block) may be replaced with SS, PSS, SSS, or PBCH.

It is to be noted that "network" may be replaced with "gNB", "TRP", "LMF", or the like.

It is to be noted that the Serving TRP may be replaced with a reference TRP, or the like.

It is to be noted that the non-Serving TRP may be replaced with a neighbor TRP, or the like.

It is to be noted that "configured by the network" may be replaced with "configured by RRC signaling", "activated/deactivated/updated by MAC-CE", "indicated by DCI", or the like.

According to an embodiment of the present invention, the terminal 20 can perform positioning using angle information even in a case where the terminal 20 does not support a reference signal for positioning. In addition, the terminal 20 can perform angle estimation that is finer than the SSB beam index granularity.

In other words, positioning using a reference signal other than the reference signal for positioning can be performed in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

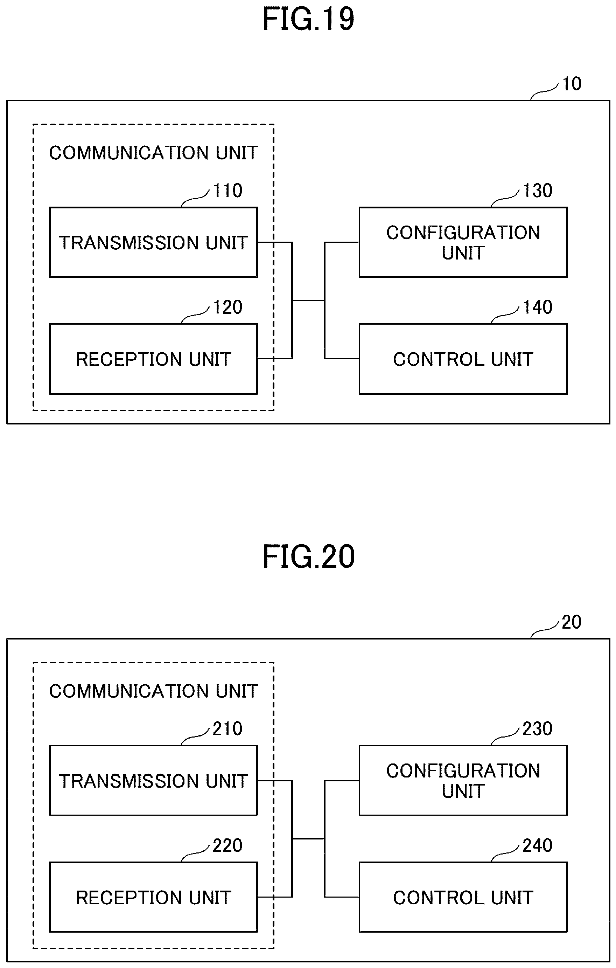

Fig. 19 is a diagram illustrating an example of a functional configuration of the base station 10. As shown in Fig. 19, the base station 10 includes a transmission unit 110, a reception unit 120, a configuration unit 130, and a control unit 140. The functional configuration illustrated in Fig. 19 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to a configuration of positioning.

The control unit 140 performs control related to the positioning as described in an embodiment of the present invention. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

Fig. 20 is a diagram illustrating an example of a functional configuration of the terminal 20. As shown in Fig. 20, the terminal 20 includes a transmission unit 210, a reception unit 220, a configuration unit 230, and a control unit 240. The functional configuration illustrated in Fig. 20 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. In addition, the configuration unit 230 also stores pre-configured configuration information. Contents of the configuration information are, for example, information related to a configuration of positioning.

The control unit 240 performs control related to the positioning as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 19 and Fig. 20) show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

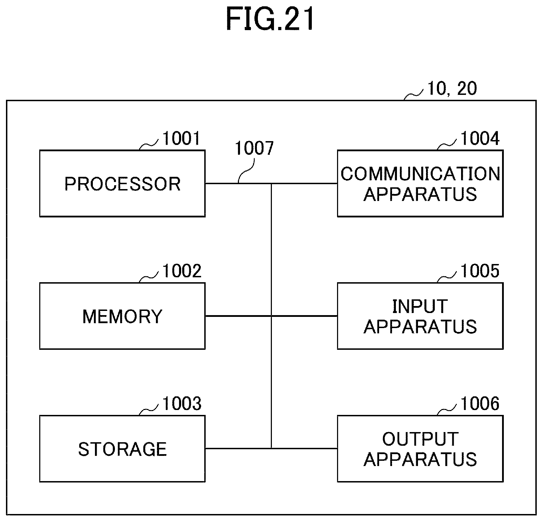

For example, the base station 10, the terminal 20, etc., according to an embodiment of the present disclosure may function as a computer for processing the radio communication method of the present disclosure. Fig. 21 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 19 may be implemented by control programs that are stored in the memory 1002 and that operate on the processor 1001. In addition, for example, the control unit 240 of the terminal 20 illustrated in Fig. 20 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving antenna, the amplifier unit, the transmitting/receiving unit, the transmission line interface, and the like, may be implemented by the communication apparatus 1004. The transmitting/receiving unit may be implemented by physically or logically being divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

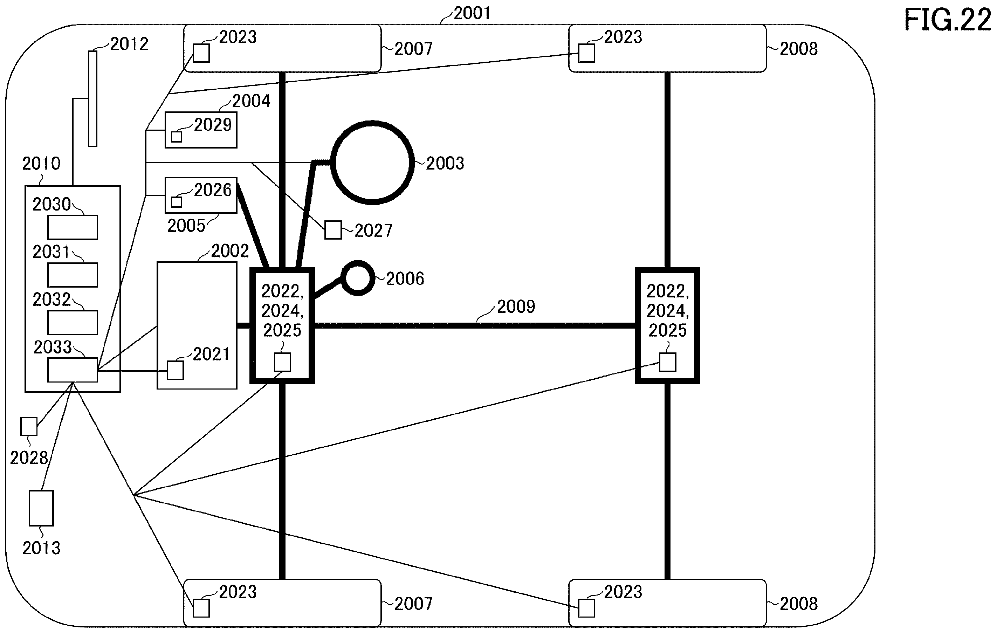

Fig. 22 shows an example of a configuration of a vehicle 2001. As shown in Fig. 22, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a reception unit configured to receive, from a base station, an indication of measurement for positioning based on a beam transmitted from the base station; a control unit configured to perform the measurement; and a transmission unit configured to transmit a result of the measurement or a positioning result that is calculated based on the result of the measurement to the base station. The beam is applied to a block including a synchronization signal and broadcast information or to a signal for obtaining channel state information.

According to the above-described configuration, the terminal 20 can perform positioning using angle information even in a case where the terminal 20 does not support a reference signal for positioning. In addition, the terminal 20 can perform angle estimation that is finer than the SSB beam index granularity. In other words, positioning using a reference signal other than the reference signal for positioning can be performed in the wireless communication system.

The transmission unit may report a number of transmission beams of the base station that can be received for the measurement or a number of configurable reception beams to the base station. According to the above-described configuration, the terminal 20 can perform positioning using angle information even in a case where the terminal 20 does not support a reference signal for positioning.

The control unit may perform the measurement in a case where a subcarrier spacing is equal to or greater than a certain value. According to the above-described configuration, the terminal 20 can perform positioning using angle information even in a case where the terminal 20 does not support a reference signal for positioning.

The control unit may perform the measurement in a case where beams are configured, a number of the beams being equal to or greater than a certain number. According to the above-described configuration, the terminal 20 can perform positioning using angle information even in a case where the terminal 20 does not support a reference signal for positioning.

The control unit may measure RSRP (Reference Signal Received Power) of a certain beam and one or more beams that are spatially neighboring the certain beam in the measurement. According to the above-described configuration, the terminal 20 can perform positioning using angle information even in a case where the terminal 20 does not support a reference signal for positioning.

In addition, according to an embodiment of the present invention, a positioning method performed by a terminal is provided. The communication method includes: receiving, from a base station, an indication of measurement for positioning based on a beam transmitted from the base station; performing the measurement; and transmitting a result of the measurement or a positioning result that is calculated based on the result of the measurement to the base station. The beam is applied to a block including a synchronization signal and broadcast information or to a signal for obtaining channel state information.

According to the above-described configuration, the terminal 20 can perform positioning using angle information even in a case where the terminal 20 does not support a reference signal for positioning. In addition, the terminal 20 can perform angle estimation that is finer than the SSB beam index granularity. In other words, positioning using a reference signal other than the reference signal for positioning can be performed in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), higher layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The mobile station may be a vehicle (e.g., a car, an airplane, etc.), an unmanned mobile body (e.g., a drone, an automated vehicle, etc.), or a robot (manned or unmanned). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

The numerology may be a communication parameter applied to at least one of transmission and reception of a certain signal or channel. The numerology may indicate at least one of a subcarrier spacing (SCS), a bandwidth, a symbol length, a cyclic prefix length, a transmission time interval (TTI), the number of symbols per TTI, a radio frame structure, a specific filtering process performed by a transceiver in the frequency domain, a specific windowing process performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). A slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be also referred to as a fractional bandwidth, and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a terminal 20.

At least one of configured BWPs may be active, and a terminal 20 may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive, from a base station, an indication of measurement for positioning based on a beam transmitted from the base station;
a control unit configured to perform the measurement; and
a transmission unit configured to transmit a result of the measurement or a positioning result that is calculated based on the result of the measurement to the base station, wherein
the beam is applied to a block including a synchronization signal and broadcast information or to a signal for obtaining channel state information.

2. The terminal as claimed in claim 1, wherein
the transmission unit reports a number of transmission beams of the base station that can be received for the measurement or a number of configurable reception beams to the base station.

3. The terminal as claimed in claim 1, wherein
the control unit performs the measurement in a case where a subcarrier spacing is equal to or greater than a certain value.

4. The terminal as claimed in claim 1, wherein
the control unit performs the measurement in a case where beams are configured, a number of the beams being equal to or greater than a certain number.

5. The terminal as claimed in claim 1, wherein
the control unit measures RSRP (Reference Signal Received Power) of a certain beam and one or more beams that are spatially neighboring the certain beam in the measurement.

6. A positioning method performed by a terminal, the positioning method comprising:
receiving, from a base station, an indication of measurement for positioning based on a beam transmitted from the base station;
performing the measurement; and
transmitting a result of the measurement or a positioning result that is calculated based on the result of the measurement to the base station, wherein
the beam is applied to a block including a synchronization signal and broadcast information or to a signal for obtaining channel state information.
